# EUROPÄISCHE PATENTSCHRIFT

(11) **EP 4 313 472 B1**
(45) Veröffentlichungstag und Bekanntmachung des Hinweises auf die Patenterteilung: **06.11.2024**
(21) Anmeldenummer: 22717543.7
(22) Anmeldetag: 22.03.2022
(51) Int. Cl.: B23K 26/244, B23K 26/242, B23K 33/00

(54) **VERFAHREN ZUM LASERSCHWEISSEN**
METHOD FOR LASER WELDING
PROCÉDÉ DE SOUDAGE AU LASER

(30) Priorität: 22.03.2021 DE 102021107058
(43) Veröffentlichungstag der Anmeldung: 07.02.2024
(73) Patentinhaber: KIRCHHOFF AUTOMOTIVE DEUTSCHLAND GMBH, 57439 Attendorn (DE)
(72) Erfinder: STUHRMANN, Jan, 57489 Drolshagen (DE); DAHMEN, Christian, 57462 Olpe (DE)
(74) Vertreter: Haverkamp Patentanwälte PartG mbB
(86) Internationale Anmeldenummer: PCT/EP2022/057402
(87) Internationale Veröffentlichungsnummer: WO 2022/200301

(56) Entgegenhaltungen:
- EP-A2- 0 771 605
- US-A- 5 821 493
- US-A1- 2019 375 047

## Beschreibung

Die Erfindung betrifft ein Verfahren zum Laserschweißen mit den Merkmalen des Oberbegriffs des Anspruchs 1.

Laserschweißen ist eine gängige Methode, um zwei Fügepartner miteinander stoffschlüssig zu verbinden. Hierbei werden die beiden Fügepartner zueinander positioniert und typischerweise mit einer Spanneinrichtung zusammengehalten. Anschließend wird mittels eines Laserstrahls der Fügestoß zum stofflichen Verbinden der beiden Fügepartner aufgeschmolzen. Laserschweißen hat den Vorteil, dass zwar lokal hinreichend hohe Energie in die Werkstücke eingebracht wird, die Wärmeeinflusszone jedoch gering bleibt, da aufgrund der hohen Schweißgeschwindigkeit und der nur sehr lokal eingebrachten Energie nur wenig Material aufgeschmolzen wird. Zum Durchführen des Schweißvorganges wird der Laserkopf mit dem Laserstrahl relativ gegenüber den zusammengehaltenen Fügepartnern bewegt. Typischerweise ist der Laserkopf bewegt, während die Fügepartner ortsfest verbleiben.

Ein Laserschweißverfahren ist beispielsweise in DE 10 2017 105 900 A1 offenbart. Bei diesem vorbekannten Verfahren werden die beiden Fügepartner an ihren Stößen miteinander verbunden, indem die beiden Fügepartner so ausgerichtet werden, dass sie mit ihren Fügeflanschen aneinander anliegen und ihre Stöße bündig miteinander abschließen. Zum Verschweißen wird ein Laserstrahl auf den zwischen den beiden Fügeflanschen befindlichen Fügespalt und somit auf die Stöße gerichtet. Die beiden Fügepartner werden unter einem Winkel zueinander positioniert, sodass sich auf der laserstrahlabgewandten Seite ein Spalt einstellt, aus dem Entgasungsprodukte, die vor allem beim Schweißen von beschichteten Fügepartnern, wie etwa von verzinkten Stahlblechen, entstehen, abgeführt werden können, ohne dass dieser Entgasungsprozess sich nachteilig auf die Ausbildung der Schweißnaht auswirkt.

Aus EP 0 771 605 B1 ist ein Verfahren zum Verbinden zweier Stahlbleche bekannt, wobei zumindest eines dieser Stahlbleche eine Beschichtung mit einem niedrigen Schmelzpunkt aufweist, beispielsweise eine Zinkbeschichtung. Gemäß diesem vorbekannten Verfahren werden die beiden Fügepartner mit einem spitzen Winkel aufeinanderstoßend zum Zwecke des Fügens angeordnet. Anschließend wird als Schweißnaht eine Kehlnaht ausgebildet und auf diese Weise eines der Bleche längs seiner Stirnseite mit dem anderen verschweißt. Das Verschweißen erfolgt mittels Laserstrahl. Durch diesen wird längs des Stoßes des einen Fügepartners eine Laserstrahl-Kehlnaht gelegt. Die beiden Fügepartner werden zum Zwecke des Fügens in einer Spannvorrichtung zueinander positioniert und gehalten. Um eine Entgasung durch den durch die winklige Anordnung der beiden Fügepartner zueinander gebildeten Spalt zu bewirken, ist die Schnittkante des einen Fügepartners längs seiner Stirnseite mit Zähnchen ausgestattet. Die Entgasungsprodukte der Beschichtung können sodann durch die zwischen den Zähnen befindlichen Lücken und die durch die winklige Anordnung der Fügepartner bereitgestellte Entgasungswegsamkeit auf der Laserstrahl abgewandten Seite entweichen. Aufgrund der Auslegung der Schweißnaht als Kehlnaht durchgreift diese den Fügestoß nicht. Der auf der schweißabgewandten Seite befindliche Spalt, der einen Öffnungswinkel von 7° bis 15° Grad aufweisen kann, endet mit einer Null-Spaltweite an der Schweißnaht.

Problematisch ist hierbei, dass eine solche winklige Anordnung von Bauteilen im Bereich der Wurzel des auf der laserstrahlabgewandten Seite befindlichen Spaltes Korrosionserscheinungen auftreten können. Durch einen mittlerweile erhöhten Anspruch an die Korrosionsbeständigkeit, werden selbst kleinere Korrosionsstellen, die über die Lebensdauer eines solchen Bauteils auftreten können, nicht mehr akzeptiert. Bei dem vorstehend genannten Verfahren kann dieses auftreten, da im Bereich der Schweißstelle die Zinkbeschichtung verdampft und abgeführt wird. Der sich durch die winklige Positionierung der beiden Fügepartner zueinander ausgebildete Spalt ist in aller Regel nicht weit genug bzw. der Spaltwinkel ist zu klein, als dass in diesen in diejenigen Bereiche, in denen aufgrund des Schweißvorganges die Zinkbeschichtung verdampft ist, die gewünschten Beschichtungen eingebracht werden können. Möglich sind zwar Beschichtungen , etwa Wachsbeschichtungen zur Hohlraumkonservierung oder eine erneute geeignete Zinkbeschichtung; diese sind jedoch mit erhöhtem Aufwand und damit einhergehenden höheren Kosten verbunden.

Vor diesem Hintergrund ist es Aufgabe der Erfindung, ein Laserschweißverfahren vorzuschlagen, mit dem zwei Bauteile (Fügepartner) sicher verbunden werden können und bei dem die vorstehend aufgezeigte Korrosionsproblematik vermieden wird.

Gelöst wird diese Aufgabe mit einem eingangs genannten, gattungsgemäßen Verfahren mit den Merkmalen des Anspruchs 1.

Bevorzugte Weiterbildungen sind in den Unteransprüchen beschrieben.

Es hat sich überraschenderweise herausgestellt, dass das Anstellen des Laserstrahls gegenüber der Fügezone bei einer Überlappstoßschweißung nicht dazu führt, dass der zweite Fügepartner im Bereich seiner Fügezone tief ein- oder durchgeschweißt wird, sondern dass sich im Kontakt- und Spaltbereich - dem Fügestoß - der beiden Fügepartner eine in Richtung der Spaltöffnung gekrümmte, und nicht dem Lichteinfallswinkel linear folgende, erstaunlich homogene und tiefe Schweißwurzel ausbildet. Die Einschweißtiefe erstreckt sich durch den eigentlichen Fügestoß hindurch bis in den auf der laserstrahlabgewandten Seite befindlichen Spalt hinein. Aufgeschmolzenes Metall dringt in den Spalt und füllt den engsten Spaltbereich . Die in den Spalt auf der laserabgewandten Seite einfließende Schmelze bildet einen Boden, durch den die den Spalt begrenzenden Seitenflächen der Fügepartner beabstandet sind. Ein solcher Spaltboden kann gerade, mehr oder weniger gerade oder konvex oder auch konkav ausgeführt sein. Wesentlich ist, dass durch den Spaltboden die Spaltweite des zwischen den Fügepartnern auf der laserstrahlabgewandten Seite befindlichen Spaltes an keiner Stelle eine Null-Erstreckung aufweist oder so eng ist, dass die gewünschte Korrosionsbeschichtung an diese nicht gelangen kann. Der Laserschweißprozess wird kontrolliert durchgeführt - durchaus auch ohne Schweißzugabe -, wodurch der Spalt bis zu einer solchen Spaltweite durch den durch die Schmelze gebildeten Boden durch aufgeschmolzenes Material gefüllt wird, bis die Spaltweite hinreichend groß ist, damit für einen nachgeschalteten Beschichtungsprozess, beispielsweise eine KTL-Beschichtung, sichergestellt ist, dass dieses Material bis an die Wurzel des Spaltes, die bei diesem Verfahren durch den durch den Schweißprozess gebildeten Spaltboden gebildet ist, gelangt. In aller Regel wird eine Spaltweite von etwa 0,2 mm als ausreichend angesehen, um dieser Anforderung zu genügen. Eine solche Weite ist ausreichend, damit das gesamte Bauteil in kostengünstiger Art und Weise beispielsweise mit einer KT-Lackierung (KTL = kathodische Tauchlackierung) beschichtet werden kann. Durch Auffüllen der Wurzel des auf der laserstrahlabgewandten Seite befindlichen Spaltes bis zu einer Spaltweite, in die sich KT-Lack abscheiden kann, ist sichergestellt, dass auch in diesen Bereichen des Bauteils eine KTL-Beschichtung bestimmungsgemäß aufgebracht werden kann.

Die in den Stoß des Fügeflansches des ersten Fügepartners durch den Laserstrahl eingebrachte Wärme schmilzt diesen abschnittsweise auf, wodurch die durch den Fügestoß in den Spalt gebrachte Schmelze bereitgestellt wird. Der zweite Fügepartner fungiert mit seiner Fügezone als Schweißnahtstütze. Durch das Auftreffen des Laserstrahls auf diese Fügefläche mit einem Winkel, der vorzugsweise kleiner als 45°, insbesondere kleiner als 30° ist, ist die in die Fügezone des zweiten Fügepartners eingebrachte Energie deutlich geringer als die in den Stoß des ersten Fügepartners eingebrachte. Damit wird der Stoß des ersten Fügepartners als Quelle für Schweißmaterial genutzt. Die Verwendung des Stoßes des Fügeflansches des ersten Fügepartners als Quelle bzw. Reservoir für das Schweißmaterial hat zum Vorteil, dass der Laserstrahl zumindest maßgeblich in den Stoß und damit in Richtung der Materialerstreckung und nicht quer dazu den ersten Fügepartner beaufschlagt. Dieses ist vorteilhaft für das Schweißverfahren, da dann nicht die Gefahr besteht, dass dieser Fügepartner durchgebrannt wird. Die geometrische Mittellinie des Laserstrahls ist zu diesem Zweck von dem Fügestoß, der durch das Aneinandergrenzen der beiden Fügepartner gebildet ist, vorzugsweise in Richtung zu dem ersten Fügepartner hin versetzt.

Der Stoß des Fügeflansches des ersten Fügepartners ist in Richtung seiner Erstreckung in Materialstärke typischerweise gerade ausgeführt.

Der Fügeflansch kann abgewinkelt gegenüber der Haupterstreckung des Fügepartners sein; es kann sich insbesondere um einen ausgestellten, etwa abgekanteten Kragen handeln. Der Übergang zwischen Fügeflansch und den übrigen Bestandteilen dieses Fügepartners ist dann aufgrund des Umformprozesses typischerweise mit einem Radius gekrümmt. Bei einer solchen Ausgestaltung ist die eine den Spalt begrenzende Wand gekrümmt mit sukzessiver größer werdendem Öffnungswinkel.

Der zweite Fügepartner verfügt dagegen über eine flächige Fügezone, auf der der Fügeflansch des ersten Fügepartners angeschweißt wird. Die Fügezone ist typischerweise zu unterscheiden von dem Stoß des Fügepartners. Diese Fügezone ist bezüglich ihrer mit dem Laserstrahl beaufschlagten Seite typischerweise von dem Ende des Fügepartners beabstandet. Diese Fügezone kann sich jedoch auch in jedem beliebigen Bereich dieses Fügepartners befinden.

Für den Prozess des Laserschweißens wird der Fügeflansch des einen Fügepartners an die Fügezone des anderen Fügepartners herangeführt, sodass beide Fügepartner einander zur Ausbildung des Fügestoßes kontaktieren. Der Fügeflansch des ersten Fügepartners ist gegenüber dem Ende des zweiten Fügepartners zurückversetzt, sodass eine Kehle gebildet wird. Angestrebt ist die Positionierung der beiden Fügepartner zueinander mit einem sogenannten Nullspalt im Fügestoß. Der Kontakt zwischen den beiden Fügepartnern kann linienförmig oder flächenförmig sein. Liegen der Fügeflansch und die Fügezone flächig aneinander an, sollte darauf geachtet werden, dass die Erstreckung dieser Fläche in Richtung der Tiefe des Fügestoßes nicht größer ist als die Materialstärke des dünneren Fügepartners. Untersuchungen haben gezeigt, dass anderenfalls die gewünschte Schweißnahtausbildung mit ihrer Ausdehnung in den Spalt hinein nicht mit der vorgesehenen Laserstrahlenergie herbeigeführt werden kann. Idealerweise ist der erste Fügepartner der in der Fügezone dünner ausgebildete Fügepartner. Bei dieser Ausgestaltung konnte besonders prozesssicher eine hochfeste Verbindung bei gleichzeitiger Verfüllung der Wurzel des eingestellten Spaltes auf der laserstrahlabgewandten Seite des Fügestoßes erreicht werden, sodass die Spaltweite im Bereich der Wurzel im Ergebnis mindestens 0,2 mm breit ist.

Ist der Fügeflansch des ersten Fügepartners gegenüber angrenzenden Bereichen abgewinkelt, ergibt sich der Spalt automatisch durch die durch die Ausstellung bedingte Krümmung des Fügepartners. Sind beide Fügepartner eben, ist es erforderlich, dass der Fügeflansch an die Fügezone unter einem Winkel von 5° bis 45° gehalten wird, um eine ausreichende Aufweitung zu gewährleisten. Es versteht sich, dass der Spaltwinkel so gewählt wird, dass mit der zur Verfügung stehenden Schmelze der Spalt soweit gefüllt werden kann, bis die vorgesehene minimale Spaltweite hinreichend groß ist, damit eine Korrosionsschutzbeschichtung ohne weiteres sich abscheiden kann. Durch den eingerichteten Spalt können etwaige Entgasungsprodukte, insbesondere, falls es sich um zinkbeschichtete Fügepartner handelt, entweichen. Gleichzeitig ist der Spalt eine Leitlinie für die Schweißwurzel; diese erstreckt sich entlang des Spaltes und verbindet so entlang einer großen Anbindungsfläche die beiden Fügepartner. Hierdurch entsteht eine besonders belastbare Schweißverbindung.

In bevorzugter Ausgestaltung ist vorgesehen, dass die beiden Fügepartner unter einem Winkel von 5° bis 20° im Bereich des Fügestoßes aneinander gehalten werden.

Der Laserstrahl wird auf die durch die beiden sich kontaktierenden Fügepartner gebildete Kehle fokussiert, wobei das Zentrum des Laserstrahls bevorzugt auf den Stoß des ersten Fügepartners gerichtet ist. Der Fügestoß, also derjenige Bereich, in dem die beiden Fügepartner aneinandergrenzen, wird mit einem Strahlabschnitt des Laserstrahls erwärmt, der von der geometrischen Mitte beabstandet ist.

Die beiden Fügepartner sind typischerweise in einer Spannvorrichtung unter Vorspannung zum Zwecke des Fügens gehalten.

Besonders bevorzugt ist vorgesehen, wenn die Laserenergie sowie die Kontaktfläche zwischen Fügezone und Fügeflansch so zueinander eingerichtet werden, dass auf der von der laserbeaufschlagten Seite abgewandten Seite eine typischerweise wulstige Schweißnaht bereitgestellt wird. Es wird so eine Schweißnaht mit konvexer Oberfläche bereitgestellt, die den Spalt für eine anschließende KTL-Beschichtung im Bereich der Spaltwurzel ausreichend verfüllt.

Vorteilhafterweise wird das hier vorgeschlagene Verfahren ohne zusätzliche Schweißzusatzstoffe durchgeführt; dies verringert erheblich den konstruktiven Aufbau der Schweißmaschinen sowie die Prozesskosten.

Die so gefertigte Schweißverbindung kann problemlos beispielsweise mittels KTL beschichtet werden, also mit einer im Behandlungszustand relativ hochviskosen Flüssigkeit. Derartige Beschichtungen sind besonders dauerhaft. Eine solche Beschichtung schließt sich an das vorstehend beschriebene Verfahren an. Vorteilhafterweise wird ein Zinkcoating, welches die Fügepartner der laserbeaufschlagten abgewandten Seite schützt, bei dem vorstehend beschriebenen Verfahren soweit wie möglich nicht beschädigt, sodass eine KTL-Beschichtung letztendlich nur lokal angewendet werden müsste. Typischerweise wird jedoch das gesamte Bauteil KTL-beschichtet.

Die Erfindung wird nachstehend anhand der beiliegenden Figuren näher erläutert. Es zeigen:
- **Fig. 1:**: Eine schematische Darstellung zweier Fügepartner nach einer ersten Ausführungsform,
- **Fig. 2:**: eine schematische Darstellung zweier Fügepartner nach einer zweiten Ausführungsform,
- **Fig. 3:**: eine schematische Darstellung zweier Fügepartner nach einer dritten Ausführungsform,
- **Fig. 4a:**: eine schematische Darstellung zweier Fügepartner nach einer vierten Ausführungsform,
- **Fig. 4b:**: die beiden Fügepartner der Figur 4a nach Durchführen eines Laserschweißprozesses und
- **Fig. 5a:**: einen mikroskopischen Anschliff durch den Fügestoß zweier miteinander gefügter Fügepartner, gefügt mit dem erfindungsgemäßen Laserschweißen.

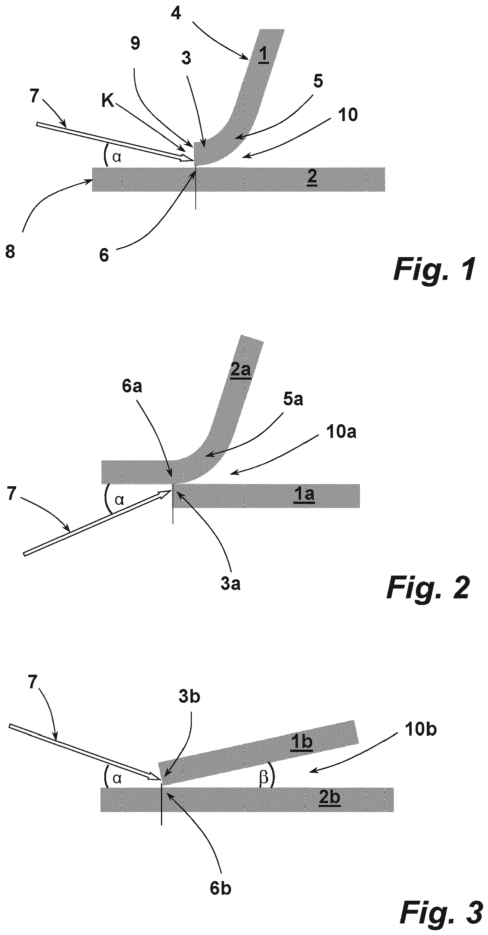

Figur 1 zeigt einen Querschnitt einer Anordnung der Randabschnitte eines ersten Fügepartners 1 und eines zweiten Fügepartners 2 nach einer ersten Ausführungsform. Der erste Fügepartner 1 umfasst einen Fügeflansch 3, welcher gegenüber dem den Fügestoß begrenzenden Material 4 ausgestellt bzw. abgewinkelt ist. Der Übergang zwischen Fügeflansch 3 und umgebendem Material 4 ist durch eine Krümmung 5 realisiert. Der zweite Fügepartner 2 umfasst eine Fügezone 6. Mit dem Bezugszeichen 7 ist ein Laserstrahl bezeichnet.

Die dem Laserstrahl 7 zugewandte Seite der Fügezone 6 ist von dem Ende 8 - dem Stoß - dieses Fügepartners 2 beabstandet; in diesem Ausführungsbeispiel in etwa dem Vierfachen der Blechdicke des dünneren Fügepartners, wobei im vorliegenden Ausführungsbeispiel beide Fügepartner 1, 2 gleich dick sind.

Durch die Anordnung des Fügeflansches 3 des Fügepartners 1 auf der durch eine Flachseite gebildete Fügezone 6 des zweiten Fügepartners 2 wird eine stufenförmige Anordnung - eine Kehle K - gebildet. Der Laserstrahl 7 ist auf die Kehle K, die durch den Stoß 9 des Fügeflansches 3 und die Fügezone 6 gebildet wird, fokussiert. Der Winkel α zwischen Fügezone 6 und Laserstrahl 7 beträgt bei dem dargestellten Ausführungsbeispiel etwa 25°. Das Zentrum des Laserstrahls 7 trifft auf das untere Drittel des Stoßes 9 des ersten Fügepartners 1.

Der Fügeflansch 3 kontaktiert die Fügezone 6 bei dem dargestellten Ausführungsbeispiel in einem Linienkontakt.

Auf der dem Laserstrahl 7 abgewandten Seite der Anordnung ist ein Spalt 10, welcher sich aufgrund der Krümmung des Fügeflansches 3 gegenüber der Fügezone 6 mit zunehmendem Öffnungswinkel aufweitet.

Figur 2 zeigt einen Querschnitt einer zweiten Ausführungsform. Im Gegensatz zum ersten Ausführungsbeispiel ist in diesem Ausführungsbeispiel der erste Fügepartner 1a gerade ausgeführt, während der zweite Fügepartner 2a über eine mit einer Krümmung 5a versehene und somit abschnittsweise gekrümmte Fügezone 6a verfügt. Auch in diesem Ausführungsbeispiel berühren sich der Fügeflansch 3a des Fügepartners 1a und die Fügezone 6a des zweiten Fügepartners 2a in einer Linie.

Figur 3 zeigt eine Querschnittsdarstellung einer weiteren erfindungsgemäßen Anordnung. Hier ist der in diesem Ausführungsbeispiel gerade ausgeführte Fügeflansch 3b des ersten Fügepartners 1b gegenüber der ebenfalls gerade ausgeführten Fügezone 6b des zweiten Fügepartners 2b winklig angeordnet, und zwar unter einem Winkel β von ca. 25°. Auch hier berührt der Fügeflansch 3b die Fügezone 6b linienförmig.

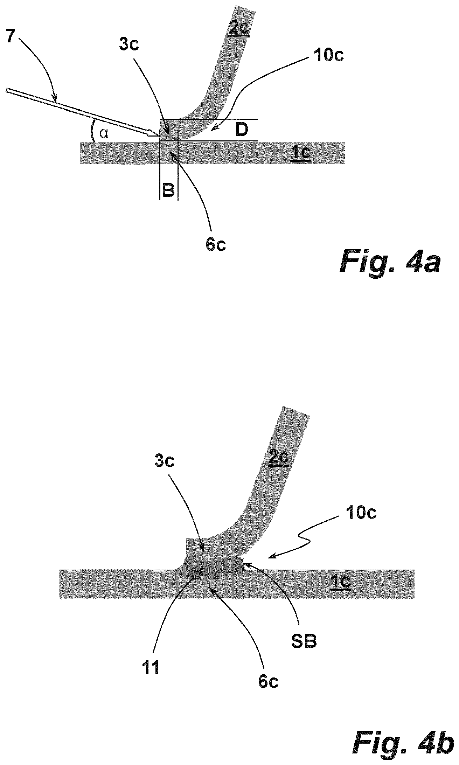

Figur 4a zeigt einen Querschnitt einer weiteren Ausführungsform. Bei dieser Ausführungsform kontaktiert der Fügeflansch 3c des ersten Fügepartners 1c die Fügezone 6c des zweiten Fügepartners 2c flächig. In diesem Querschnitt ist gut erkennbar, dass der flächige Kontakt in Richtung quer zu der dem Laserstrahl 7c zugewandten Seite in etwa der Dicke D des dünneren, in diesem Beispiel der Fügeflansch 3c des ersten Fügepartners 1c, in Breitenrichtung B entspricht.

Figur 4b zeigt die Anordnung gemäß Figur 4a, nachdem der Laserschweißprozess abgeschlossen ist. Zu erkennen ist in dieser schematischen Darstellung, dass sich die Schweißnaht entlang der Kontaktfläche der beiden Fügepartner 1c, 2c ausgebildet hat und so die beiden Fügepartner 1c und 2c über den Fügeflansch 3c bzw. die Fügezone 6c verbunden hat. Die Schmelze ist mit dem Bezugszeichen 11 kenntlich gemacht. Gut zu erkennen ist, dass die Schweißnaht zum ersten Fügepartner 1c hin gekrümmt ist, bedingt durch den sich in Richtung zum ersten Fügepartner 1c aufweitenden Spalt 10c.

Auf diese Weise kann der auf der dem Laserstrahl 7d abgewandten Seite angeordnete Spalt 10c soweit verfüllt werden, dass die Spaltweite S grö-ßer/gleich 0,2 mm beträgt und somit bis zu dieser minimalen Weite aufgefüllt worden ist. Durch das Eindringen des aufgeschmolzenen Metalls in dem Spalt 10c hat sich ein Spaltboden SB gebildet, durch den die Spaltweite S im Bereich seines zur Schmelze 11 weisenden Abschluss begrenzt ist. Die verbliebene minimale Spaltweite S wird so gewählt, dass eine Antikorrosionsbeschichtung, etwa eine KTL-Beschichtung problemlos, in den Spalt bis zu seinem durch die Schmelze gebildeten Spaltboden SB eingebracht werden kann. Somit verbleiben in dem Spalt 10c keine nicht beschichtbaren Zwickel.

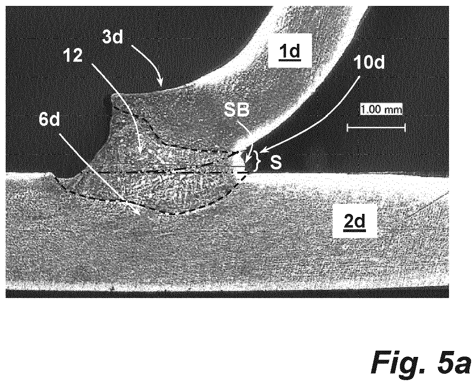

Die Figur 5a zeigt eine mikroskopische Darstellung eines erfindungsgemäß verschweißten Exemplars zweier Fügepartner 1d, 2d. Die Schweißung wurde mit einem Laserstrahl mit einem Durchmesser von etwa 0,8 mm durchgeführt. Der erste Fügepartner 1d ist 1,5 mm und der zweite Fügepartner 2d 2 mm dick. Deutlich ist zu erkennen, wie sich die Schweißnaht 12 entlang der Kontaktfläche zwischen dem Fügeflansch 3d und der Fügezone 6d ausgebildet hat. An der zu der Laserbeaufschlagung abgewandten Seite ist eine wulstige, den Spaltboden SB bildende konvexe Schweißnaht ausgebildet.

Ferner ist zu erkennen, dass stoßseitige Teile des Fügeflansches 3d abgeschmolzen sind. Es versteht sich, dass nur so viel Material aufgeschmolzen wird, wie dieses für die Fügeverbindung der beiden Fügepartner 1d, 2d einschließlich der gewünschten Spaltwurzelfüllung zum Ausbilden des Spaltbodens SB benötigt wird. Dieses Material stellt das durch den Fügestoß in den Spalt 10d eingebrachte Material dar. Die Spaltweite S beträgt bei diesem Ausführungsbeispiel wiederum 0,4 mm.

In Figur 5a ist mit gestrichelter Linie die Umgrenzung der Schweißnaht 12, mithin desjenigen Bereiches, der aufgeschmolzen worden ist, kenntlich gemacht. Mit strichpunktierter Linie ist in dieser Figur die ursprüngliche Oberfläche der beiden Fügepartner 1d, 2d im Bereich der Fügestelle eingetragen. Deutlich erkennbar ist, dass durch das beschriebene Laserschweißverfahren aufgeschmolzenes Material in den Spalt 10d eingeflossen ist, durch welches Material die minimale Weite des Spaltes 10d auf die Breite des Spaltbodens SB mit der Spaltweite S gebracht worden ist. Erkennbar ist ferner der geschwungene Verlauf der Schweißnaht 12, wie dieser schematisiert auch in Figur 4b dargestellt ist.

Die Erfindung ist anhand von Ausführungsbeispielen beschrieben worden. Ohne den Schutzbereich, beschrieben durch die Ansprüche, zu verlassen, ergeben sich für den Fachmann zahlreiche weitere Ausgestaltungen, ohne dass diese im Rahmen dieser Ausführungen erläutert werden müssten.

### Bezugszeichenliste

Angehängte Buchstaben an Bezugszeichen bezeichnen das gleiche Teil in einer anderen Ausführungsart.
- 1: erster Fügepartner
- 2: zweiter Fügepartner
- 3: Fügeflansch
- 4: umgebendes Material
- 5: Krümmung
- 6: Fügezone
- 7: Laserstrahl
- 8: Ende
- 9: Stoß
- 10: Spalt
- 11: Schweiße
- 12: Schweißnaht

- K: Kehle
- D: Materialstärke
- B: Breite
- S: Spaltweite
- SB: Spaltboden
- β: Winkel Fügepartner
- α: Winkel Laserstrahl

## Patentansprüche

1. Verfahren zum Laserschweißen zweier aneinander in einem Überlappstoß gehaltener Fügepartner (1, 2; 1a, 2a; 1b, 2b; 1c, 2c; 1d, 2d) aus einem Metallwerkstoff wobei zur Ausbildung eines Überlappstoßes entweder der Fügeflansch (3, 3a, 3c, 3d) des ersten Fügepartners (1, 1a, 1c, 1d) gegenüber angrenzenden Bereichen abgewinkelt ist, und sich automatisch ein Spalt (10, 10a, 10c, 10d) durch die Ausstellung bedingte Krümmung des Fügepartners (1, 1a, 1c, 1d) ergibt, oder beide Fügepartner (1b, 2b) eben sind, und der Fügeflansch (3b) an die Fügezone (6b) unter einem Winkel (10b) von 5° bis 45° gehalten wird, wobei in beiden Fällen der erste Fügepartner (1, 1a, 1b, 1c, 1d) einen Fügeflansch (3, 3a, 3b, 3c, 3d) mit einem Stoß (9) und der zweite Fügepartner (2, 2a, 2b, 2c, 2d) eine Fügezone (6, 6a, 6b, 6c, 6d) an einer Flachseite aufweist, wobei für den Prozess des Laserschweißens der erste Fügepartner (1, 1a, 1b, 1c, 1d) mit einer Seite seines Fügeflansches (3, 3a, 3b, 3c, 3d) die Fügezone (6, 6a, 6b, 6c, 6d) des zweiten Fügepartners (2, 2a, 2b, 2c, 2d) kontaktierend gehalten wird, wobei zwischen den beiden Fügepartnern im Kontaktbereich der beiden Fügepartner (1, 2; 1a, 2a; 1b, 2b; 1c, 2c; 1d, 2d) ein sich in Richtung von der laserbeaufschlagten Seite wegweisend aufweitender Spalt (10, 10a, 10b, 10c, 10d) vorgesehen ist, und wobei die Schweißung so durchgeführt wird, dass sich die gebildete Schweißnaht (12) bis in den Spalt (10, 10a, 10b, 10c, 10d) erstreckt und hierdurch in dem Spalt (10, 10a, 10b, 10c, 10d) ein Spaltboden (SB), durch den die einander gegenüberliegenden Oberflächen der Fügepartner (1, 2, 1a, 2a, 1b, 2b, 1c, 2c,1d, 2d) beabstandet sind, gebildet ist, **dadurch gekennzeichnet, dass** der Laserstrahl (7) in die durch Fügezone (6, 6a, 6b, 6c, 6d) und Fügeflansch (3, 3a, 3b, 3c, 3d) gebildete Kehle (K) unter einem Winkel (α) von 1° bis 45° gegenüber der Ebene der Fügezone (6, 6a, 6b, 6c, 6d) gerichtet wird und die Schweißung so durchgeführt wird, dass durch den Spaltboden die Spaltweite des zwischen den Fügepartnern auf der laserstrahlabgewandten Seite befindlichen Spaltes an keiner Stelle eine Null-Erstreckung aufweist oder so eng ist, dass die gewünschte Korrosionsbeschichtung an diese nicht gelangen kann und wobei nach dem Schweißprozess die Fügepartner (1, 2; 1a, 2a; 1b, 2b; 1c, 2c; 1d, 2d) mit einer Korrosionsschutzschicht, bevorzugt einer KTL-Beschichtung, zumindest im Bereich des Spaltbodens (SB) versehen werden.

2. Verfahren nach Anspruch 1, **dadurch gekennzeichnet, dass** der Fügeflansch (3, 3a, 3b, 3c, 3d) des ersten Fügepartners (1, 1a, 1b, 1c, 1d) an die Fügezone (6, 6a, 6b, 6c, 6d) des zweiten Fügepartners (2, 2a, 2b, 2c, 2d) so ausgebildet und gehalten wird, dass der Fügeflansch (3, 3a, 3b, 3c, 3d) die Fügezone (6, 6a, 6b, 6c, 6d) an der dem Laserstrahl (7) zugewandten Seite einen Linienkontakt oder mit einer Fläche kontaktiert, deren Breite (B) quer zur laserbeaufschlagten Seite der Materialstärke (D) des dünneren Fügepartners (1, 2; 1a, 2a; 1b, 2b; 1c, 2c; 1d, 2d) in der Fügezone (6, 6a, 6b, 6c, 6d) entspricht.

3. Verfahren nach Anspruch 2, **dadurch gekennzeichnet, dass** der erste Fügepartner (1, 1a, 1b, 1c, 1d) der in der Fügezone (6, 6a, 6b, 6c, 6d) dünner ausgebildete Fügepartner (1, 1a, 1b, 1c, 1d) der beiden Fügepartner (1, 2; 1a, 2a; 1b, 2b; 1c, 2c; 1d, 2d) ist.

4. Verfahren nach einem der Ansprüche 1 bis 3, **dadurch gekennzeichnet, dass** der Laserstrahl in die durch Fügezone und Fügeflansch gebildete Kehle (K) unter einem Winkel (α) von 7° bis 30°, bevorzugt 15° bis 25°, gegenüber der Ebene der Fügezone (6, 6a, 6b, 6c, 6d) gerichtet wird.

5. Verfahren nach einem der Ansprüche 1 bis 4, **dadurch gekennzeichnet, dass** der Fügeflansch (3, 3a, 3b, 3c, 3d) an die Fügezone (6, 6a, 6b, 6c, 6d) unter einem Winkel (β) von 5° bis 45° gehalten wird.

6. Verfahren nach Anspruch 5, **dadurch gekennzeichnet, dass** der Winkel (β) 7° bis 30° beträgt.

7. Verfahren nach einem der Ansprüche 1 bis 6, **dadurch gekennzeichnet, dass** zumindest ein Fügepartner mit einer Zinkbeschichtung versehen ist, die während des Schweißprozesses aus dem Bereich der Fügezone (6, 6a, 6b, 6c, 6d) verdampft.

8. Verfahren nach einem der Ansprüche 1 bis 7, **dadurch gekennzeichnet, dass** an der von der laserbeaufschlagten Seite abgewandten Seite in dem Spalt (10, 10a, 10b, 10c, 10d) eine wulstartige Schweißnaht ausgebildet wird.

9. Verfahren nach einem der Ansprüche 1 bis 8, **dadurch gekennzeichnet, dass** der Schweißprozess ohne Schweißzusatzstoffe durchgeführt wird.

## Claims

1. Method for the laser welding of two parts to be joined (1, 2; 1a, 2a; 1b, 2b; 1c, 2c; 1d, 2d) held against each other in a lap joint and made of a metal material, wherein, in order to form a lap joint, either the joining flange (3, 3a, 3c, 3d) of the first part to be joined (1, 1a, 1c, 1d) is angled in relation to adjacent regions, and a gap (10, 10a, 10c, 10d) is automatically incurred by the curvature of the part to be joined (1, 1a, 1c, 1d) incurred by the inclination, or both parts to be joined (1b, 2b) are flat, and the joining flange (3b) is held at the joining zone (6b) at an angle (10b) of 5° to 45°, wherein, in both cases, the first part to be joined (1, 1a, 1b, 1c, 1d) has a joining flange (3, 3a, 3b, 3c, 3d) with an end face (9), and the second part to be joined (2, 2a, 2b, 2c, 2d) has a joining zone (6, 6a, 6b, 6c, 6d) on a flat side, wherein, for the laser welding process, the first part to be joined (1, 1a, 1b, 1c, 1d) is held in contact, by means of a side of its joining flange (3, 3a, 3b, 3c, 3d), with the joining zone (6, 6a, 6b, 6c, 6d) of the second part to be joined (2, 2a, 2b, 2c, 2d), wherein, between the two parts to be joined, in the contact region of the two parts to be joined (1, 2; 1a, 2a; 1b, 2b; 1c, 2c; 1d, 2d), a gap (10, 10a, 10b, 10c, 10d) is provided which widens in the direction away from the side to which the laser is applied, and wherein the welding is carried out in such a way that the weld seam (12) which is formed extends as far as into the gap (10, 10a, 10b, 10c, 10d) and, as a result, a gap bottom (SB) is formed in the gap (10, 10a, 10b, 10c, 10d) which spaces apart the mutually opposite surfaces of the parts to be joined (1, 2; 1a, 2a; 1b, 2b; 1c, 2c; 1d, 2d), **characterised in that** the laser beam (7) is directed into the throat (K) formed by the joining zone (6, 6a, 6b, 6c, 6d) and the joining flange (3,3a, 3b, 3c, 3d) at an angle (α) of 1° to 45° in relation to the plane of the joining zone (6, 6a, 6b, 6c, 6d), and the welding is carried out in such a way that, due to the gap bottom, the gap width of the gap between the parts to be joined on the side facing away from the laser beam, does not at any point have a zero extension, or is so narrow that the corrosion coating which is desired cannot pass into this, and wherein, after the welding process, the parts to be joined (1, 2; 1a, 2a; 1b, 2b; 1c, 2c; 1d, 2d) are provided with a corrosion protection coating, preferably a KTL coating, at least in the region of the gap bottom (SB).

2. Method according to claim 1, **characterised in that** the joining flange (3,3a, 3b, 3c, 3d) of the first part to be joined (1, 1a, 1b, 1c, 1d) is formed and held to the joining zone (6, 6a, 6b, 6c, 6d) of the second part to be joined (2, 2a, 2b, 2c, 2d) in such a way that the joining flange (3, 3a, 3b, 3c, 3d) makes a line contact with the joining zone (6, 6a, 6b, 6c, 6d) on the side facing towards the laser beam (7), or contacts a surface of which the width (B) transverse to the side subjected to the laser corresponds to the material thickness (D) of the part to be joined (1, 2; 1a, 2a; 1b, 2b; 1c, 2c; 1d, 2d) which is thinner in the joining zone (6, 6a, 6b, 6c, 6d).

3. Method according to claim 2, **characterised in that** the first part to be joined (1, 1a, 1b, 1c, 1d) is the part to be joined (1, 1a, 1b, 1c, 1d) which is formed as the thinner in the joining zone (6, 6a, 6b, 6c, 6d) of the two parts to be joined (1, 2; 1a, 2a; 1b, 2b; 1c, 2c; 1d, 2d).

4. Method according to any one of claims 1 to 3, **characterised in that** the laser beam is directed into the throat (K) formed by the joining zone and joining flange at an angle (α) of 7° to 30°, preferably 15° to 25°, in relation to the plane of the joining zone (6, 6a, 6b, 6c, 6d).

5. Method according to any one of claims 1 to 4, **characterised in that** the joining flange (3, 3a, 3b, 3c, 3d) is held to the joining zone (6, 6a, 6b, 6c, 6d) at an angle (β) of 5° to 45°.

6. Method according to claim 5, **characterised in that** the angle (β) amounts to 7° to 30°.

7. Method according to any one of claims 1 to 6, **characterised in that** at least one part to be joined is provided with a zinc coating, which evaporates out of the region of the joining zone (6, 6a, 6b, 6c, 6d) during the welding process.

8. Method according to any one of claims 1 to 7, **characterised in that** a bead-type welding seam is formed in the gap (10, 10a, 10b, 10c, 10d) on the side facing away from the side which is subjected to the laser.

9. Method according to any one of claims 1 to 8, **characterised in that** the welding process is carried out without welding fillers.

## Revendications

1. Procédé de soudage au laser de deux éléments à jointer (1, 2 ; 1a, 2a ; 1b, 2b ; 1c, 2c ; 1d, 2d) en matériau métallique maintenus l'un contre l'autre en joint de recouvrement, la réalisation du joint de recouvrement se faisant soit en repliant la bride de jointage (3, 3a, 3c, 3d) du premier élément à jointer (1, 1a, 1c, 1d) par rapport aux zones voisines et une fente (10, 10a, 10c, 10d) se formant automatiquement en raison de la position courbe de l'élément à jointer(1, 1a, 1c, 1d), soit avec deux éléments à jointer (1b, 2b) plans et la bride de jointage (3b) étant maintenue au niveau de la zone de jointage (6b) selon un angle (10b) de 5° à 45°, dans les deux cas, le premier élément à jointer (1, 1a, 1b, 1c, 1d) présentant une bride de jointage (3, 3a, 3b, 3c, 3d) avec un about (9) et le second élément à jointer (2, 2a, 2b, 2c, 2d), une zone de jointage (6, 6a, 6b, 6c, 6d) sur un côté plan, le premier élément à jointer (1, 1a, 1b, 1c, 1d) étant, au cours du processus de soudage au laser, maintenu par un côté de sa bride de jointage (3, 3a, 3b, 3c, 3d) au contact de la zone de jointage (6, 6a, 6b, 6c, 6d) du second élément à jointer (2, 2a, 2b, 2c, 2d), une fente (10, 10a, 10b, 10c, 10d) étant prévue dans la zone de contact des deux éléments à jointer (1, 2 ; 1a, 2a ; 1b, 2b ; 1c, 2c ; 1d, 2d), entre les deux éléments à jointer, laquelle fente s'évase dans le sens opposé à la face exposée au laser, et le soudage étant exécuté de telle manière que le joint de soudure (12) réalisé s'étend jusqu'à la fente (10, 10a, 10b, 10c, 10d) et qu'il se forme de ce fait, dans la fente (10, 10a, 10b, 10c, 10d), un fond de fente (SB) par lequel les surfaces des éléments à jointer (1, 2, 1a, 2a, 1b, 2b, 1c, 2c, 1d, 2d) qui se font face sont espacées, **caractérisé en ce que** le rayon laser (7) est dirigé sur la gorge (K) formée par la zone de jointage (6, 6a, 6b, 6c, 6d) et la bride de jointage (3, 3a, 3b, 3c, 3d) avec un angle (α) de 1° à 45° par rapport au plan de la zone de jointage (6, 6a, 6b, 6c, 6d) et le soudage est exécuté de telle manière qu'en raison du fond de fente, la largeur de la fente se trouvant entre les éléments à jointer sur le côté opposé à la face exposée au rayon laser ne présente en aucun endroit une étendue nulle ou est si étroit que le revêtement anti-corrosion souhaité ne peut atteindre cet endroit et qu'après le processus de soudage, les éléments à jointer (1, 2 ; 1a, 2a ; 1b, 2b ; 1c, 2c ; 1d, 2d) sont munis, au moins au niveau du fond de fente (SB), d'une couche de protection contre la corrosion, de préférence par cataphorèse KTL.

2. Procédé selon la revendication 1, **caractérisé en ce que** la bride de soudage (3, 3a, 3b, 3c, 3d) du premier élément à jointer (1, 1a, 1b, 1c, 1d) est configurée et maintenue contre la zone de jointage (6, 6a, 6b, 6c, 6d) du second élément à jointer (2, 2a, 2b, 2c, 2d) de telle sorte que la bride de soudage (3, 3a, 3b, 3c, 3d) entre en contact avec la zone de jointage (6, 6a, 6b, 6c, 6d), sur le côté orienté vers le rayon laser (7), par une ligne ou une surface, dont la largeur (B) correspond, perpendiculairement à la face exposée au laser, à l'épaisseur du matériau (D) de l'élément à jointer (1, 2 ; 1a, 2a ; 1b, 2b ; 1c, 2c ; 1d, 2d) le plus fin dans la zone de jointage (6, 6a, 6b, 6c, 6d).

3. Procédé selon la revendication 2, **caractérisé en ce que**, dans la zone de jointage (6, 6a, 6b, 6c, 6d), le premier élément à jointer (1, 1a, 1b, 1c, 1d) est l'élément à jointer (1, 1a, 1b, 1c, 1d) le plus fin des deux éléments à jointer (1, 2 ; 1a, 2a ; 1b, 2b ; 1c, 2c ; 1d, 2d).

4. Procédé selon l'une des revendications 1 à 3, **caractérisé en ce que** le rayon laser est dirigé sur la gorge (K) formée par la zone de jointage et la bride de jointage selon un angle (α) de 7° à 30°, de manière privilégiée de 15° à 25°, par rapport au plan de la zone de jointage (6, 6a, 6b, 6c, 6d).

5. Procédé selon l'une des revendications 1 à 4, **caractérisé en ce que** la bride de jointage (3, 3a, 3b, 3c, 3d) est maintenue contre la zone de jointage (6, 6a, 6b, 6c, 6d) selon un angle (β) de 5° à 45°.

6. Procédé selon la revendication 5, **caractérisé en ce que** l'angle (β) est de 7° à 30°.

7. Procédé selon l'une des revendications 1 à 6, **caractérisé en ce qu'**au moins un élément à jointer est muni d'un revêtement en zinc qui s'évapore de la zone de jointage (6, 6a, 6b, 6c, 6d) pendant le processus de soudage.

8. Procédé selon l'une des revendications 1 à 7, **caractérisé en ce que** dans la fente (10, 10a, 10b, 10c, 10d), sur le côté opposé à la face exposée au laser, est réalisée une soudure à la manière d'un bourrelet.

9. Procédé selon l'une des revendications 1 à 8, **caractérisé en ce que** le processus de soudage est réalisé sans matériaux additifs de soudage.
